# FASCICULE DE BREVET EUROPEEN

(11) **EP 2 047 577 B1**
(45) Date de publication et mention de la délivrance du brevet: **22.09.2010**
(21) Numéro de dépôt: 07823372.3
(22) Date de dépôt: 30.07.2007
(51) Int. Cl.: H02J 3/14, H02J 13/00

(54) **PROCEDE ET SYSTEME DE GESTION ET DE MODULATION EN TEMPS REEL DE CONSOMMATION ELECTRIQUE**
VERFAHREN UND SYSTEM ZUR ECHTZEIT-STROMVERBRAUCHSVERWALTUNG UND -MODULATION
METHOD AND SYSTEM OF REAL TIME MANAGEMENT AND MODULATION OF ELECTRICITY CONSUMPTION

(30) Priorité: 31.07.2006 FR 0606994
(43) Date de publication de la demande: 15.04.2009
(73) Titulaire: Voltalis SA, 75008 Paris (FR)
(72) Inventeur: OURY, Jean-Marc, 75007 Paris (FR); HEINTZ, Bruno, 75015 Paris (FR)
(74) Mandataire: L'Helgoualch, Jean
(86) Numéro de dépôt international: PCT/FR2007/001317
(87) Numéro de publication internationale: WO 2008/017754

(56) Documents cités:
- WO-A-96/33544
- WO-A-03/025701
- WO-A-03/084022

## Description

L'invention concerne un procédé de gestion et de modulation en temps réel de la consommation électrique d'un ensemble de consommateurs, ainsi qu'un système spécialement adapté à un tel procédé.

L'invention traite plus spécifiquement du problème de la mesure, du contrôle et de la régulation de la puissance électrique consommée par une pluralité de consommateurs, dans l'optique de la diminuer d'un niveau qui a été prédéterminé.

Par l'expression "ensemble de consommateurs", on entend plusieurs milliers ou centaines de milliers de sites consommateurs dispersés sur un vaste territoire.

Le problème technique de l'équilibre entre la production et la consommation électrique se pose en permanence en raison des variations de consommation et de l'impossibilitéO de stocker l'énergie électrique. Cette contrainte exige des producteurs d'électricité de pouvoir disposer de moyens d'ajuster la production à tout moment et pas seulement en périodes de pointes de consommation.

On connaît déjà, du document EP 1 548 451, un système de lecture à distance et de gestion de la consommation électrique, destiné à contrôler la consommation d'énergie d'un grand nombre d'utilisateurs. Ce système est agencé pour garantir un fonctionnement continu de l'ensemble du réseau, en prenant notamment en compte les risques de coupure générale dus à des surconsommations. A cet effet, ce système prévoit de pouvoir modifier les données transmises à un compteur électrique, afin de diminuer localement et temporairement la consommation d'énergie de l'ensemble des appareils associés à ce compteur.

Toutefois, ce système ne prévoit pas la possibilité de moduler de façon fine et en temps réel, la consommation électrique d'un ensemble ciblé d'équipements électriques situé chez un consommateur, de façon indépendante du compteur électrique.

La demande de brevet WO 03084022 décrit un procédé et un système de régulation de la consommation électrique d'un ensemble de consommateurs, consistant à mesurer en temps réel la consommation électrique au moyen d'un boîtier situé chez chaque consommateur contrôlant les circuits d'alimentation des équipements. Les boîtiers des consommateurs transmettent les mesures à un serveur central qui peut couper sélectivement l'alimentation électrique des équipements. Ce système permet de réguler la consommation en écrêtant les pointes de consommation. Par contre, il ne permet pas d'assurer l'équilibre permanent de la consommation afin d'adapter la consommation au niveau de production

Pour répondre à ces besoins, l'invention propose un procédé permettant de gérer et de moduler en temps réel la consommation électrique d'un nombre important de consommateurs, en tenant compte, à un moment donné, des besoins et des possibilités de chacun d'entre eux afin d'assurer en permanence l'équilibre entre la production et la consommation électrique.

A cet effet, selon un premier aspect, l'invention propose un procédé de gestion et de modulation en temps réel de la consommation électrique d'un ensemble de consommateurs, qui comprend les étapes suivantes:
a) mesure en temps réel et en continu de la consommation électrique d'une pluralité d'ensembles ciblés d'équipements électriques en fonctionnement, chaque ensemble d'équipements étant situé chez un consommateur, la mesure de la consommation de ces équipements étant effectuée individuellement ou globalement au moyen d'un boîtier de régulation électrique situé chez le consommateur, chaque boîtier étant en liaison directe avec les circuits électriques d'alimentation de ces équipements ;
b) transmission en mode "push" par lesdits boîtiers des mesures de consommation vers un serveur central programmé pour lire, conserver et analyser ces données ;
c) établissement en continu d'un profil de consommation individuel de chaque consommateur pour en déduire une prévision individuelle de sa consommation et les capacités disponibles ;
d) établissement en temps réel par le serveur d'une coupure sélective et temporaire de l'alimentation électrique de certains équipements électriques, en fonction d'une consigne globale d'effacement de puissance électrique et en fonction des capacités disponibles établies chez chaque consommateur, de manière à assurer en permanence l'équilibre entre la production et la consommation électrique ;
e) envoi par le serveur, vers les boîtiers des équipements électriques sélectionnés de l'ordre de coupure de l'alimentation électrique des équipements électriques avec lesquels ils sont en liaison ;
f) réception et exécution par ces boîtiers de l'ordre envoyé par ledit serveur.

Par "liaison directe" entre chaque boîtier et un circuit d'alimentation électrique, on entend aussi bien une liaison filaire locale ou distante qu'une liaison sans fil, par exemple au moyen de rayons infrarouges ou d'ondes radio. Cette liaison permet au boîtier de commander un relais placé sur le circuit électrique, ce relais étant capable de couper l'alimentation électrique de l'ensemble ciblé concerné.

Le procédé selon l'invention a donc pour fonction de déclencher à distance la coupure d'un ensemble ciblé de circuits d'alimentation d'équipements électriques chez de nombreux consommateurs, au moyen d'un boîtier installé chez les consommateurs concernés.

Cet ensemble est ciblé en collectant en temps réel et en continu les puissances consommées par ces équipements : les ordres de coupure peuvent être répartis en fonction de ces puissances observées, afin de répondre à une consigne globale à un moment donné. Dans le cas où la consigne émise est d'effacer une certaine puissance globale, les circuits coupés sont déterminés pour atteindre cette puissance.

Les boîtiers utilisés dans le procédé selon l'invention assurent donc chacun plusieurs fonctions :
- ils mesurent en permanence les consommations de chacun des équipements électriques avec lesquels ils sont en liaison ;
- ils transmettent ces mesures en mode "push" au serveur central qui les agrège et établissent en continu un profil individuel de la consommation de chaque consommateur et peut ordonner des interruptions ;
- ils reçoivent et exécutent les ordres d'interruption temporaire de certains des circuits électriques auxquels ils sont liés.

Ces boîtiers sont par conséquent des dispositifs de mesure, de conservation et de transmission des données, mais aussi de réception et d'action, dans la mesure où ils peuvent opérer des coupures sélectives, c'est-à-dire couper l'alimentation électrique d'une partie ciblée de l'installation électrique des consommateurs concernés.

Le serveur de l'invention comprend des moyens pour assurer l'enregistrement et le traitement des données reçues des boîtiers, et pour alimenter un modèle fondé sur un apprentissage permanent permettant d'établir en continu un profil de consommation de chaque consommateur et d'en déduire une prévision de la consommation future et, par conséquent, des ressources disponibles. Il est alors possible, grâce aux moyens de transmission entre le serveur et les boîtiers, d'agir sélectivement en temps réel sur certains boîtiers pour adapter la consommation à la production disponible.

Le procédé selon l'invention permet aussi de prévoir de façon avantageuse la mise à jour et/ou la modification du programme d'au moins l'un des boîtiers de régulation électrique à partir du serveur central, par téléchargement de fichiers et de logiciels.

Selon une réalisation préférée, chaque boîtier de régulation électrique fonctionne de façon autonome par rapport aux autres boîtiers et par rapport aux autres éléments de l'installation électrique du site, notamment les autres dispositifs de contrôle ou de mesure qui y sont installés. Le terme "autonome" signifie donc ici notamment que chaque boîtier fonctionne de façon indépendante des autres boîtiers.

Chaque boîtier utilisé dans le procédé selon l'invention peut être formé d'un seul ou--de plusieurs éléments. Lorsque le boîtier est en un seul élément, il présente l'avantage d'être compact et d'être aisé à installer. Toutefois, selon les cas, il peut être au contraire avantageux de prévoir un boîtier constitué de plusieurs éléments présentant chacun des fonctionnalités différentes.

La transmission des données des boîtiers vers le serveur central est réalisée au moyen de réseaux commutés filaires (RTC) ou non filaires (tel que GSM), ou de préférence par transmission de données par paquets selon le protocole IP sur réseaux filaires, tel que l'ADSL, ou non filaires tel que GPRS. Ce mode de transmission présente l'avantage non seulement de permettre le suivi d'un grand nombre de boîtiers, quand la commutation des circuits susciterait des engorgements, mais également de pouvoir gérer un grand nombre de boîtiers à un coût raisonnable.

Le procédé selon l'invention peut intégrer en outre des données de mesure complémentaires de la consommation électrique des ensembles ciblés d'équipements électriques, ou de tout ou partie de l'installation électrique du consommateur, ladite mesure étant réalisée par des dispositifs de mesure autres que le boîtier de régulation électrique et avec lesquels est établie une liaison vers celui-ci. Ces données complémentaires sont par exemple destinées à permettre la vérification ou la validation des données transmises directement par les boîtiers de régulation électrique.

Selon un deuxième aspect, l'invention a pour objet un système de gestion et de modulation en temps réel de la consommation électrique d'un ensemble de consommateurs, qui comprend :
- une pluralité de boîtiers de régulation électrique, chaque boîtier étant en liaison directe, en continu, avec les circuits électriques d'alimentation d'équipements électriques faisant partie d'un ensemble ciblé, ledit ensemble ciblé d'équipements électriques et ledit boîtier étant situé chez un consommateur, ledit boîtier étant programmé pour mesurer et conserver les données de consommation électrique de chaque ensemble ciblé en temps réel, transmettre lesdites données vers un serveur central, recevoir et exécuter des ordres dudit serveur ;
- des moyens de transmission en mode push des données desdits boîtiers vers le serveur central ;
- un serveur central comportant des moyens d'une part pour lire et analyser les données transmises par lesdits boîtiers et, sur cette base, d'établir un profil de consommation de chaque consommateur pour en déduire une prévision individuelle de sa consommation et les capacités disponibles et pour établir en temps réel une coupure sélective et temporaire de l'alimentation électrique de certains équipements électriques, en fonction d'une consigne globale d'effacement de puissance électrique et en fonction des capacités disponibles établies chez chaque consommateur, de manière à assurer en permanence l'équilibre entre la production et la consommation électrique, et d'autre part pour coupure envoyer aux boîtiers des équipements électriques sélectionnés l'ordre de coupure de l'alimentation électrique des équipements électriques avec lesquels ils sont en liaison,
- des moyens de transmission des ordres du serveur central vers lesdits boîtiers et ;
- des moyens de coupure sélective et temporaire de l'alimentation électrique des équipements électriques.

Pour les raisons indiquées plus haut, il est avantageux que chaque boîtier de régulation électrique fonctionne de façon autonome par rapport aux autres boîtiers et par rapport aux autres éléments de l'installation électrique du site.

Le serveur central du système selon l'invention peut comprendre des moyens de mise à jour et/ou de modification du programme de chaque boîtier de régulation électrique.

Chaque boîtier de régulation électrique du système selon l'invention peut être formé d'un seul ou de plusieurs éléments.

Dans le système selon l'invention, les moyens de transmission des données des boîtiers vers le serveur central sont de préférence de réseaux commutés filaires (RTC) ou non filaires (tel que GSM), ou des moyens de transmission de données par paquets selon le protocole IP sur des réseaux filaires, tel que l'ADSL, ou non filaires tel que GPRS.

Le système selon l'invention peut comprendre en outre des dispositifs de mesure aptes à fournir des données de mesure complémentaires de la consommation électrique des ensembles ciblés d'équipements électriques ou de tout ou partie de l'installation électrique du consommateur, lesdits dispositifs étant différents des boîtiers de régulation électriques et chaque dispositif étant en liaison avec l'un desdits boîtiers.

Le système suivant l'invention présente l'avantage d'offrir aux producteurs d'électricité des capacités d'ajustement et d'équilibre permettant de s'adapter au marché de l'électricité, notamment en Europe. En effet, ces capacités constituent une ressource faisant l'objet d'un marché réglementé, géré par les opérateurs de réseau de transport (TSO ou Transport System Operators). Ces marchés fonctionnent par anticipation, typiquement du jour pour le lendemain, et les acteurs disposant de capacités d'ajustement les présentent à l'opérateur (TSO) et en détaillent l'ampleur, c'est-à-dire la puissance électrique modulable pour chaque heure ou demi-heure du jour suivant. L'opérateur utilise ensuite ces capacités si nécessaire pour équilibrer en permanence la production et la consommation.

Il permet aussi de gérer la répartition des interruptions de consommation sur un grand nombre de boîtiers de manière tournante de manière à limiter les inconvénients de la coupure pour chaque consommateur.

D'autres objets et avantages de l'invention apparaîtront au cours de la description qui suit, faite en référence aux dessins annexés dans lesquels :
- la figure 1 est une représentation schématique de l'ensemble du système permettant la mise en oeuvre du procédé selon l'invention ;
- la figure 2 est une représentation schématique des différents éléments ou modules pouvant constituer un boîtier de régulation électrique utilisable dans le procédé selon l'invention.

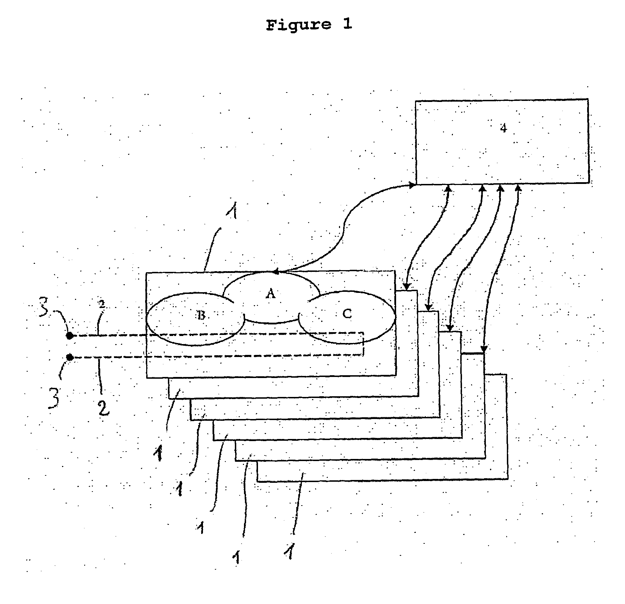

Le système selon l'invention, représenté sur la figure 1, repose sur un boîtier de régulation électrique 1 installé chez le consommateur. Ce boîtier 1 est installé dans la partie privée de l'installation électrique de chaque consommateur, c'est-à-dire en aval et indépendamment du compteur électrique. Le boîtier 1 est raccordé à une sélection de circuits électriques 2 alimentant des équipements ciblés 3 chez le consommateur.

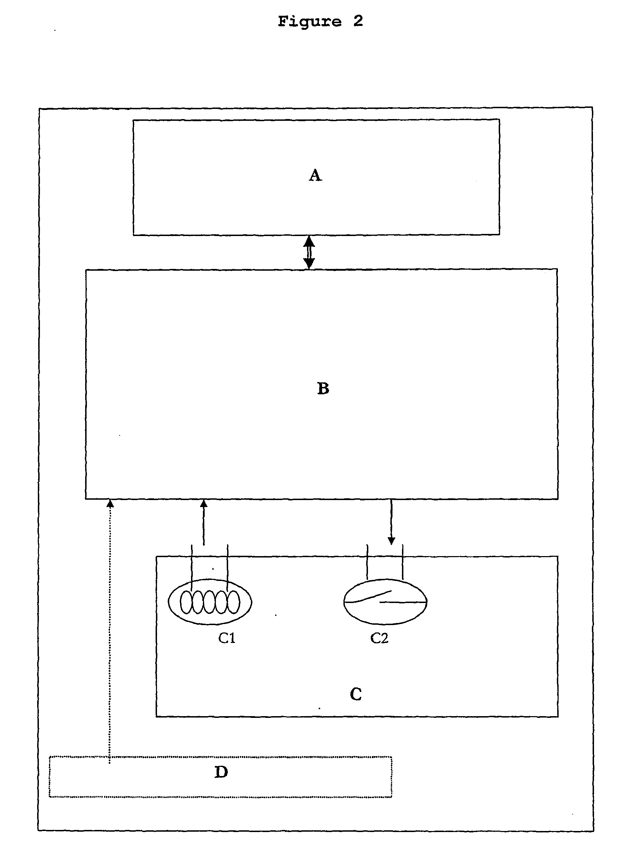

Chaque boîtier assure trois fonctions, qui peuvent, selon le mode de réalisation représenté, être mises en oeuvre par trois modules distincts A, B et C, schématisés sur les figures 1 et 2.

Le module A correspond au module de télécommunications, qui consiste en un modem GPRS et son antenne (intégrée ou déportée), ou en une liaison vers un modem ADSL (par Wi-Fi, DECT, CPL ou autre).

Le module B correspond au module de traitement des données, en particulier de recueil, de conservation des données de mesure, et d'interruption électriques. Ces fonctions sont mises en oeuvre au moyen d'un PC sous Linux doté d'une carte mémoire flash et d'un logiciel de gestion de l'acquisition des données, pilotant leur stockage et leur émission vers le module de télécommunication A.

Le logiciel est également capable de recevoir via le module de télécommunication A des instructions du serveur central le conduisant à :
- émettre les données;
- actualiser les paramètres d'acquisition et de traitement des données sur la base desquels il opère;
- déclencher les modules de contrôle des circuits électriques;
- conserver l'historique des ordres reçus et;
- en accuser réception au serveur central.

Le module C est le module de contrôle électrique, permettant la mesure et l'interruption de l'alimentation. Il comprend un dispositif de mesure C1, par exemple une boucle à induction, et un relais électrique C2 par l'intermédiaire duquel sont transmis les éventuels ordres de coupure.

Le système représenté comprend en outre un module D d'acquisition de données de mesure externes.

Le système est constitué d'un grand nombre de tels boîtiers, opérés ensemble à distance depuis une plateforme d'agrégation et de commande centralisée 4.

Ainsi pilotés, les boîtiers 1 permettent donc de fournir non seulement une information précise, mais également un canal de communication bidirectionnel ainsi qu'une capacité d'effacement à la demande.

## Revendications

1. Procédé de gestion et de modulation en temps réel de la consommation électrique d'un ensemble de consommateurs, comprenant les étapes suivantes:
a) mesure en temps réel et en continu de la consommation électrique d'une pluralité d'ensembles ciblés d'équipements électriques (3) en fonctionnement, chaque ensemble d'équipements (3) étant situé chez un consommateur, la mesure de la consommation de ces équipements (3) étant effectuée individuellement ou globalement au moyen d'un boîtier (1) de régulation électrique situé chez le consommateur, chaque boîtier (1) étant en liaison directe avec les circuits électriques d'alimentation (2) de ces équipements (3) ;
b) transmission en mode "push" par lesdits boîtiers (1) des mesures de consommation vers un serveur central (4) programmé pour lire et analyser ces données ;
c) établissement en continu d'un profil de consommation individuel de chaque consommateur pour en déduire une prévision individuelle de sa consommation et les capacités disponibles ;
d) établissement en temps réel par le serveur (4) d'une coupure sélective et temporaire de l'alimentation électrique de certains équipements électriques (3), en fonction d'une consigne globale d'effacement de puissance électrique et en fonction des capacités disponibles établies chez chaque consommateur, de manière à assurer en permanence l'équilibre entre la production et la consommation électrique ;
e) envoi par le serveur (4), vers les boîtiers (1) des équipements électriques sélectionnés (3), de l'ordre de coupure de l'alimentation électrique des équipements électriques (3) avec lesquels ils sont en liaison ;
f) réception et exécution par ces boîtiers de l'ordre envoyé par ledit serveur (4).

2. Procédé selon la revendication 1, **caractérisé en ce qu'**il comprend la mise à jour et/ou la modification du programme d'au moins l'un des boîtiers (1) de régulation électrique à partir du serveur central (4).

3. Procédé selon la revendication 1 ou 2, **caractérisé en ce que** chaque boîtier (1) de régulation électrique fonctionne de façon autonome par rapport aux autres boîtiers (1) et par rapport aux autres éléments de l'installation électrique du site.

4. Procédé selon l'une quelconque des revendications précédentes, **caractérisé en ce que** la transmission des données des boîtiers (1) vers le serveur central (4) est réalisée au moyen de réseaux (A) commutés filaires ou non filaires, ou par transmission de données par paquets selon le protocole IP sur réseaux filaires ou non filaires.

5. Procédé selon l'une quelconque des revendications précédentes, **caractérisé en ce qu'**il intègre en outre des données de mesure complémentaires de la consommation électrique des ensembles ciblés d'équipements électriques (3), ou de tout ou partie de l'installation électrique du consommateur, ladite mesure étant réalisée par des dispositifs de mesure autres que le boîtier (1) de régulation électrique et avec lesquels est établie une liaison vers celui-ci.

6. Système de gestion et de modulation en temps réel de la consommation électrique d'un ensemble de consommateurs, comprenant :
- une pluralité de boîtiers de régulation électrique (1), chaque boîtier (1) étant en liaison directe, en continu, avec les circuits électriques d'alimentation d'équipements électriques (2) faisant partie d'un ensemble ciblé (3), ledit ensemble ciblé d'équipements électriques (3) et ledit boîtier (1) étant situés chez un consommateur, ledit boîtier (1) étant programmé pour mesurer et conserver les données de consommation électrique de chaque ensemble ciblé (3) en temps réel, transmettre lesdites données vers un serveur central (4), recevoir et exécuter des ordres dudit serveur (4) ;
- des moyens de transmission (A) en mode push des données desdits boîtiers (1) vers le serveur central (4) ;
- un serveur central (4) comportant des moyens d'une part pour lire et analyser les données transmises par lesdits boîtiers (1), et, sur cette base, d'établir un profil individuel de consommation de chaque consommateur pour en déduire une prévision individuelle de sa consommation et les capacités disponibles et pour établir en temps réel une coupure sélective et temporaire de l'alimentation électrique de certains équipements électriques (3), en fonction d'une consigne globale d'effacement de puissance électrique et en fonction des capacités disponibles établies chez chaque consommateur, de manière à assurer en permanence l'équilibre entre la production et la consommation électrique, et d'autre part pour envoyer aux boîtiers (1) des équipements électriques (3) sélectionnés l'ordre de coupure de l'alimentation électrique des équipements électriques (3) avec lesquels ils sont en liaison ;
- des moyens de transmission des ordres du serveur (4) central vers lesdits boîtiers (1) et ;
- des moyens de coupure sélective et temporaire (C2) de l'alimentation électrique des équipements électriques (3).

7. Système selon la revendication 6, **caractérisé en ce que** le serveur central (4) comprend des moyens de mise à jour et/ou de modification du programme de chaque boîtier (1) de régulation électrique.

8. Système selon la revendication 6 ou 7, **caractérisé en ce que** chaque boîtier (1) de régulation électrique est formé d'un seul ou de plusieurs éléments.

9. Système selon l'une quelconque des revendications 6 à 8, **caractérisé en ce que** les moyens de transmission (A) des données des boîtiers (1) vers le serveur central (4) sont des réseaux commutés filaires ou non filaires, ou des moyens de transmission de données par paquets sur des réseaux filaires ou non filaires.

10. Système selon l'une quelconque des revendications 6 à 9, **caractérisé en ce qu'**il comprend en outre des dispositifs de mesure aptes à fournir des données de mesure complémentaires de la consommation électrique des ensembles ciblés d'équipements (3) électriques ou de tout ou partie de l'installation électrique du consommateur, lesdits dispositifs étant différents des boîtiers (1) de régulation électriques et chaque dispositif étant en liaison avec l'un desdits boîtiers (1).

## Claims

1. A method of managing and modulating in real time the electrical consumption of a set of consumers, comprising the following steps:
a) real time and continuous measurement of the electrical consumption of a plurality of targeted sets of electrical equipment (3) in operation, each set of equipment (3) being situated in the home of a consumer, the measurement of the consumption of such equipment (3) being performed individually or overall by means of an electrical regulation module (1) situated in the home of the consumer, each module (1) being directly linked with the electrical power supply circuits (2) of such equipment (3);
b) "push" mode transmission by said modules (1) of the consumption measurements to a central server (4) programmed to read and analyze these data;
c) continuous establishment of an individual consumption profile of each consumer to deduce therefrom an individual prediction of its consumption and the available capacities;
d) establishment in real time, by the server (4), of a selective and temporary cutting of certain electrical equipments (3), as a function of a global setpoint to cancel a electrical power and as a function of the available capacities in the home of each consumer, in order to constantly ensure the balance between electrical production and consumption;
e) transmission by the server (4) to the modules (1) of the selected electrical equipment (3), of the instructions to cut the electrical power supply of the electrical equipments (3) with which they are linked;
f) reception and execution by these modules of the instruction sent by said server (4).

2. The method according to claim 1, **characterized in that** it comprises the updating and/or the modification of the program of at least one of the electrical regulation modules (1) from the central server (4).

3. The method according to claim 1 or 2, **characterized in that** each electrical regulation module (1) operates in a stand-alone manner relative to the other modules (1) and relative to the other elements of the electrical installation of the site.

4. The method according to any one of the preceding claims, **characterized in that** the transmission of the data from the modules (1) to the central server (4) is performed by means of wired or wireless switched networks (A), or by packet data transmission according to the IP protocol over wired or wireless networks.

5. The method according to any one of the preceding claims, **characterized in that** it also incorporates measurement data complementing the electrical consumption of the targeted sets of electrical equipment (3), or of all or part of the electrical equipment of the consumer, said measurement being performed by measuring devices other than the electrical regulation module (1) and with which a link to the latter is established.

6. A system for managing and modulating in real time the electrical consumption of a set of consumers, comprising:
- a plurality of electrical regulation modules (1), each module (1) being directly linked, continuously, with the electrical power supply circuits of electrical equipment (2) forming part of a targeted set (3), said targeted set of electrical equipment (3) and said module (1) being located in the home of a consumer, said module (1) being programmed to measure and retain the electrical consumption data of each targeted set (3) in real time, transmit said data to a central server (4), receive and execute instructions from said server (4);
- means (A) for transmitting in push mode data from said modules (1) to the central server (4);
- a central server (4) comprising means on the one hand for reading and analyzing the data transmitted by said modules (1) and, on this basis, of establishing an individual consumption profile of each consumer, to deduce therefrom an individual prediction of its consumption and the available capacities and of establishing in real time a selective and temporary cut of certain electrical equipment (3), as a function of a global setpoint to cancel a electrical power and as a function of the available capacities by each consumer, in order to constantly ensure the balance between electrical production and consumption, and on the other hand for transmitting to the modules (1) of the targeted electrical equipments (3) instructions to cut the electrical power supply to the electrical equipment (3) with which they are linked;
- means for transmitting instructions from the central server (4) to said modules (1) and;
- means (C2) for selectively and temporarily cutting the electrical power supply to the electrical equipment (3).

7. The system according to claim 6, **characterized in that** the central server (4) comprises means of updating and/or modifying the program of each electrical regulation module (1).

8. The system according to claim 6 or 7, **characterized in that** each electrical regulation module (1) is formed of one or several elements.

9. The system according to any one of claims 6 to 8, **characterized in that** the means (A) of transmitting data from the modules (1) to the central server (4) are wired or wireless switched networks, or means of packet data transmission over wired or wireless networks.

10. The system according to any one of claims 6 to 9, **characterized in that** it also comprises measuring devices able to supply measurement data complementing the electrical consumption of the targeted sets of electrical equipment or of all or part of the electrical installation of the consumer, said devices being different from the electrical regulation modules (1) and each device being linked with one of said modules (1).

## Patentansprüche

1. Verfahren zur Verwaltung und Modulation des Stromverbrauchs einer Gruppe von Verbrauchern in Echtzeit, das folgende Schritte umfasst:
a) das fortlaufende Messen des Stromverbrauchs einer Vielzahl von Zielgruppen lektrischer Geräte (3) in Betrieb in Echtzeit, wobei sich jede Gruppe von Geräten (3) bei einem Verbraucher befindet, wobei die Messung des Verbrauchs dieser Geräte (3) individuell oder als Gesamtbetrag durch einen bei dem Verbraucher befindlichen Stromreglerkasten (1) erfolgt, wobei jeder Stromreglerkasten (1) direkt mit den Versorgungsstromkreisen (2) der Geräte (3) verbunden ist;
b) im "Push"-Modus Übertragung der Verbrauchsmesswerte durch die Stromreglerkästen (1) an einen zentralen Server (4), der programmiert ist, um diese Daten zu lesen und zu analysieren;
c) kontinuierliche Erstellung eines individuellen Verbrauchsprofils für jeden Verbraucher, um daraus eine individuelle Vorhersage seines Verbrauchs und der verfügbaren Kapazitäten abzuleiten;
d) Durchführung einer selektiven und temporären Trennung der Stromversorgung bestimmter elektrischer Geräte (3) in Echtzeit durch den Server (4) in Abhängigkeit von einer globalen Anweisung zum Schalten der elektrischen Leistung und in Abhängigkeit von den bei jedem Verbraucher vorhandenen, verfügbaren Kapazitäten, um ein ständiges Gleichgewicht zwischen Stromerzeugung und -verbrauch sicher zu stellen;
e) Senden der Anweisung zum Trennen der Stromversorgung der elektrischen Geräte (3), mit denen diese verbunden sind, durch den Server (4) an die Stromreglerkästen (1) ausgewählter elektrischer Geräte (3);
f) Empfangen und Ausführen der durch den Server (4) versandten Anweisung durch die Stromreglerkästen.

2. Verfahren nach Anspruch 1, **dadurch gekennzeichnet, dass** die Aktualisierung und/oder Modifizierung des Programms zumindest eines der Stromreglerkästen (1) ausgehend von dem zentralen Server (4) umfasst.

3. Verfahren nach Anspruch 1 oder 2, **dadurch gekennzeichnet, dass** jeder Stromreglerkasten (1) unabhängig von den anderen Stromreglerkästen (1) und von den anderen Elementen der elektrischen Anlage vor Ort funktioniert.

4. Verfahren nach einem der vorangegangenen Ansprüche, **dadurch gekennzeichnet, dass** die Übertragung der Daten von den Stromreglerkästen (1) zu dem zentralen Server (4) durch getaktete drahtgebundene oder nicht drahtgebundene Netzwerke (A) oder durch die Übertragung von Datenpaketen gemäß IP-Protokoll in drahtgebundenen oder nicht drahtgebundenen Netzen erfolgt.

5. Verfahren nach einem der vorangegangenen Ansprüche, **dadurch gekennzeichnet, dass** es unter anderem ergänzende Messdaten in Bezug auf den Stromverbrauch der Zielgruppen elektrischer Geräte (3) oder der gesamten oder eines Teils der elektrischen Anlage des Verbrauchers aufnimmt, wobei die Messung durch andere Messvorrichtungen als den Stromreglerkasten (1) erfolgt, wobei diese mit jenem verbunden sind.

6. System zur Verwaltung und Modulation des Stromverbrauchs einer Gruppe von Verbrauchern in Echtzeit, das Folgendes umfasst:
- eine Vielzahl an Stromreglerkästen (1), wobei jeder Stromreglerkasten (1) direkt und permanent mit den Stromkreisen zur Versorgung elektrischer Geräte (2), die Teil einer Zielgruppe (3) sind, verbunden ist, wobei sich die Zielgruppe elektrischer Geräte (3) und der Stromreglerkasten (1) bei einem Verbraucher befinden, wobei der Stromreglerkasten (1) programmiert ist, um Stromverbrauchsdaten jeder Zielgruppe (3) in Echtzeit zu messen und zu speichern, diese Daten zu einem zentralen Server (4) zu übertragen und Anweisungen von dem Server (4) zu empfangen und auszuführen;
- Mittel (A) zur Übertragung der Daten von den Stromreglerkästen (1) zu dem zentralen Server (4) im "Push"-Modus;
- einen zentralen Server (4), der Mittel umfasst, um einerseits die durch die Stromreglerkästen (1) übertragenen Daten zu lesen und zu analysieren und darauf basierend ein individuelles Verbrauchsprofil jedes Verbrauchers zu erstellen, um daraus eine individuelle Vorhersage seines Verbrauchs und der verfügbaren Kapazitäten abzuleiten und um in Echtzeit eine selektive und temporäre Trennung der Stromversorgung bestimmter elektrischer Geräte (3) vorzunehmen, in Abhängigkeit von einer globalen Anweisung zum Schalten der elektrischen Leistung und in Abhängigkeit von den bei jedem Verbraucher vorhandenen, verfügbaren Kapazitäten, um ein ständiges Gleichgewicht zwischen Stromerzeugung und -verbrauch sicher zu stellen, und um andererseits an die Stromreglerkästen (1) der ausgewählten elektrischen Geräte (3) die Anweisung zur Trennung der Stromversorgung der elektrischen Geräte (3), mit denen sie verbunden sind, zu senden;
- Mittel zur Übertragung von Anweisungen von dem zentralen Server (4) zu den Stromreglerkästen (1) und
- Mittel zur selektiven und temporären Trennung (C2) der Stromversorgung der elektrischen Geräte (3).

7. System nach Anspruch 6, **dadurch gekennzeichnet, dass** der zentrale Server (4) Mittel zur Aktualisierung und/oder Modifikation des Programms jedes Stromreglerkastens (1) umfasst.

8. System nach Anspruch 6 oder 7, **dadurch gekennzeichnet, dass** jeder Stromreglerkasten (1) aus einem oder mehreren Elementen besteht.

9. System nach einem der Ansprüche 6 bis 8, **dadurch gekennzeichnet, dass** die Mittel (A) zur Übertragung der Daten von den Stromreglerkästen (1) zu dem zentralen Server (4) getaktete drahtgebundene oder nicht drahtgebundene Netzwerke oder Mittel zur Übertragung von Datenpaketen in drahtgebundenen oder nicht drahtgebundenen Netzwerken sind.

10. System nach einem der Ansprüche 6 bis 9, **dadurch gekennzeichnet, dass** es unter anderem Messvorrichtungen umfasst, die geeignet sind, um ergänzende Messdaten in Bezug auf den Stromverbrauch der Zielgruppen elektrischer Geräte (3) oder der gesamten oder eines Teils der elektrischen Anlage des Verbrauchers bereitzustellen, wobei die Vorrichtungen andere Vorrichtungen als die Stromreglerkästen (1) sind und jede Vorrichtung mit einem der Stromreglerkästen (1) verbunden ist.
